# EUROPEAN PATENT SPECIFICATION

(11) **EP 1 507 678 B1**
(45) Date of publication and mention of the grant of the patent: **18.07.2007**
(21) Application number: 03725939.7
(22) Date of filing: 07.05.2003
(51) Int. Cl.: F16H 61/04, F16H 63/50

(54) **PROCEDURE FOR UPSHIFTING GEAR IN A MOTOR VEHICLE AND A POWER PLANT UNIT FOR A MOTOR VEHICLE**
VERFAHREN ZUM HOCHSCHALTEN EINES GANGS IN EINEM KRAFTFAHRZEUG UND ANTRIEBSAGGREGAT FÜR EIN KRAFTFAHRZEUG
PROCEDURE DE PASSAGE A UNE VITESSE SUPERIEURE DANS UN VEHICULE MOTEUR ET INSTALLATION POUR CE VEHICULE MOTEUR

(30) Priority: 17.05.2002 SE 0201498
(43) Date of publication of application: 23.02.2005
(73) Proprietor: VOLVO LASTVAGNAR AB, 405 08 Göteborg (SE)
(72) Inventor: LAURI, Erik, SE-431 59 Mölndal (SE); KARLSSON, Svante, SE-426 53 Västra Frölunda (SE); STEEN, Marcus, S-424 33 Angered (SE)
(74) Representative: Fröhling, Werner Otto
(86) International application number: PCT/SE2003/000734
(87) International publication number: WO 2003/097401

(56) References cited:
- EP-A1- 0 670 440
- WO-A1-01/92049
- US-A- 5 409 432
- US-A- 5 830 104
- US-A- 6 017 291

## Description

### TECHNICAL FIELD OF THE INVENTION

The present invention relates to a procedure for upshifting gear in a motor vehicle, comprising an internal combustion engine with an engine-braking device, an automated disk-clutch, a multi-stage gearbox with braking means for braking an intermediate shaft arranged in the gearbox, according to the preamble of patent claim 1 below. The invention also relates to a device for said procedure, according to the preamble of patent claim 4. Such a procedure and power plant is disclosed in US-A-6,017,291.

### STATE OF THE ART

In this application, a power plant comprises the internal combustion engine, disk clutch and gearbox of the vehicle, and a drive line includes the engine, the gearbox and the driving wheels.

Automatic gearboxes of the automated multi-stage gearbox type have become increasingly common in heavy-duty vehicles as microcomputer technology has developed further and made it possible, with a control computer and a number of actuators, for example servo motors, to precision-regulate engine speed, engagement and disengagement of an automated disk-clutch between the engine and the gearbox and also the coupling means of the gearbox in relation to one another, so that soft shifting is always obtained at the correct engine speed. The advantage of this type of automatic gearbox compared with a conventional automatic gearbox constructed with planetary gear stages and with a hydrodynamic torque converter on the input side is on the one hand that, especially as far as use in heavy-duty vehicles is concerned, it is simpler and more robust and can be manufactured at a considerably lower cost than the conventional automatic gearbox and on the other hand that it has higher efficiency, which means lower fuel consumption is possible.

A multi-stage gearbox is usually made up of an input shaft, an intermediate shaft, which has at least one gearwheel in engagement with a gearwheel on the input shaft, and a main shaft with gearwheels which engage with gearwheels on the intermediate shaft. The main shaft is then also connected to an output shaft coupled to the driving wheels via, for example, a drive shaft. Each pair of gearwheels has a different ratio compared with another pair of gearwheels in the gearbox. Different gears are obtained by virtue of different pairs of gearwheels transmitting the torque from the engine to the driving wheels. Each gear is usually synchronized, but variants exist where at least some gears are unsynchronized. Speed adaptation must then be effected in another way and with great precision, for example by means of an intermediate shaft brake (speed reduction of the intermediate shaft) or control of the engine speed (speed increase/reduction). An intermediate shaft brake adapts the speed of the intermediate shaft relatively rapidly to the new lower ratio to be selected, that is to say intermediate shaft braking takes place during upshifting.

Electronic control systems for the engine of a vehicle have also been affected by the development of computer technology and have become more accurate, more rapid and more adaptable to prevailing states of the engine and the surrounding environment. The entire combustion process can be precision-controlled according to each operating situation. The speed of the engine can therefore be controlled accurately. An engine can also be equipped with an engine-braking device to be used primarily as an auxiliary brake. Auxiliary brakes are used chiefly in heavy-duty vehicles with the major purpose of sparing the service brakes of the vehicle, in particular on long downhill gradients when it is desirable to brake in order to maintain a reasonably constant speed.

The term engine-braking device includes several different types of engine brake. Examples of engine brakes are compression brake, exhaust brake (valve in the exhaust pipe), electric motor/generator coupled to, for example, the output shaft of the internal combustion engine (Integrated Starter Alternator).

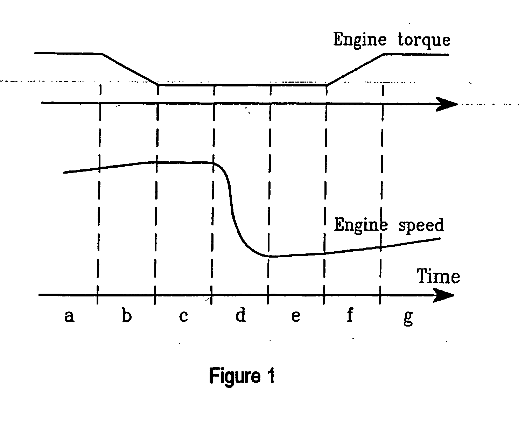

In addition to using the engine-braking device for braking the vehicle itself, that is to say as a supplement to the wheel brakes of the vehicle, it is known to use the engine-braking device, for example a compression brake, during shifting in vehicles with a multi-stage (usually automated) gearbox. By braking the rotation of the engine by means of the engine-braking device, more rapid speed adaptation from a high speed to a lower speed can be effected. Figure 1 shows the fundamental phases in connection with upshifting, that is to say shifting to a higher gear with a lower ratio. Figure 1 shows a comparison between engine torque and the rotational speed of the engine in relation to time for a given engine type.

According to Figure 1, phase "a" indicates a normal driving state which exists before shifting is initiated. Phase "b" shows the removal of engine torque as soon as it has been determined that upshifting is to take place, that is to say a claw coupling (coupling sleeve) engaged for the existing gear becomes torqueless. Phase "c" shows disengagement of the claw coupling. Phase "d" shows a reduction of the rotational speed of the engine in order to adapt the rotational speed of the engine to the new gear ratio to be selected. As soon as the rotational speed of the engine has been adapted, it is possible to begin driving the vehicle with the new gear. Phase "e" therefore shows the engagement of the new claw coupling belonging to the new gear selected. Phase "f" shows the restoration of engine torque, and phase "g" shows a normal driving state after upshifting has taken place. Note that the disk clutch between the engine and the gearbox is not disengaged during upshifting but the crankshaft of the engine is coupled together with the intermediate shaft so that the engine-braking device adapts the speed of both the engine and the intermediate shaft. Relatively accurate speed adaptation is therefore necessary in order that upshifting does not feel uncomfortable. The accuracy of the speed adaptation is even more important when shifting to unsynchronized gears.

In order to shorten the discontinuation of driving power of the vehicle during upshifting, it is an advantage if the speed of the engine can be adapted to the new gear as soon as possible. This is particularly advantageous on uphill gradients when the vehicle loses more speed when driving power is discontinued. It is known from SE-C-502154 to introduce an exhaust brake selectively during upshifting when certain operational parameters are reached so as thus to bring about rapid reduction of the engine speed during the upshifting procedure. In this way, it is said that the wear on the exhaust-braking system is reduced because the exhaust brake is introduced during only a small proportion of the total number of upshifts.

An arrangement for engine-braking in connection with an internal combustion engine is previously known from Swedish patent application no. 9804439-9. This arrangement is adapted for engine-braking by reduction of the speed of the engine during upshifting and to this end comprises a special device which is sensitive to a signal which is generated in response to a need to bring about shifting and in order to bring about take-up of a valve clearance in a rocker arm.

An automated disk-clutch as above, that is to say arranged between the engine and the gearbox, is usually regulated by means of information about the position of the throttle lever, the rotational speed of the engine, the outgoing torque of the engine and the position of the disk clutch. The controlling parameter for the position of the clutch and thus the degree of engagement between the engine and the gearbox is chiefly how the driver (alternatively a cruise control arrangement) positions the throttle lever.

One disadvantage of using engine-braking devices in order to adapt speed during upshifting is that the internal combustion engine has to be brought into a relatively narrow speed range (for example from 1600 to 1200+-50 rpm) in order to make possible comfortable engagement of the new gear. After the speed adaptation of the engine has been carried out, the gear-engagement servo itself requires a certain reaction time before the engine can begin to deliver positive driving torque to the input shaft of the gearbox. Moreover, idle times in the engine-braking function itself can mean that it is necessary to include a safety margin when driving the vehicle uphill, which makes the average speed of the vehicle worse.

The disadvantage of using an intermediate shaft brake during upshifting is that the speed of the internal combustion engine and the speed of the input shaft of the gearbox are not synchronous when the intermediate shaft brake has carried out the speed synchronization for the new gear and the new gear has been engaged. It is then necessary afterwards to use the disk clutch between the engine and the gearbox in order to synchronize the speed difference between the engine and the input shaft of the gearbox. If this synchronization does not take place relatively slowly, too great a positive torque is obtained in the drive line, which would otherwise, if synchronization were too rapid, lead to the vehicle jerking and the drive line being subjected to unnecessary stresses. Moreover, on account of the jerks, the comfort in the vehicle is reduced. Long shifting stages (large speed difference between engine and input shaft) therefore tend to take a long time.

There is therefore a need, in vehicles equipped with multi-stage gearboxes, to find an upshifting solution which can perform speed adaptation for a new gear selected in a more rapid but still comfortable way. This is the main object of the invention described below.

### SUMMARY OF THE INVENTION

The solution of the problem according to the invention with regard to the procedure and device according to the invention is described in patent claims 1 and 4 respectively. The other patent claims describe preferred embodiments and developments of the procedure (claims 2 and 3) and the device (claims 5 and 6) according to the invention.

The procedure according to the invention concerns a procedure for upshifting gear in a motor vehicle, comprising an internal combustion engine with an engine-braking device, an automated disk-clutch, a multi-stage gearbox, in the casing of which an input shaft, an intermediate shaft and a main shaft are mounted, and braking means for braking the intermediate shaft, and where, when the upshifting takes place, the disk clutch is disengaged and the intermediate shaft is disengaged from the main shaft. The method is characterized in that the braking means is activated so that the rotational speed of the intermediate shaft is adapted to the next gear selected at the same time as the rotational speed of the engine is adapted to the rotational speed of the input shaft in the new gear by virtue of the engine-braking device being activated.

The device according to the invention concerns a power plant for a motor vehicle, comprising an internal combustion engine with an engine-braking device, an automated disk-clutch, a multi-stage gearbox which has at least one intermediate shaft which is mounted in a casing and has at least one gearwheel in engagement with a gearwheel on an input shaft mounted in the casing and braking means with which the rotation of the intermediate shaft can be braked rapidly when disengagement of the disk clutch takes place, a main shaft, mounted in the casing, with gearwheels which engage with gearwheels on the intermediate shaft, at least one gearwheel in each pair of intermeshing gearwheels on the intermediate shaft and the main shaft being mounted rotatably on its shaft and lockable by coupling means, of which at least the coupling means for some forward gears lack a synchronizing function, and where the disk clutch is arranged to transmit driving power from the output shaft of the engine to the input shaft of the gearbox, a control unit with at least an engine control function, a control function for the engine-braking device and a disk-clutch control function, into which control unit signals are fed representing gear selected and various engine and vehicle data comprising at least engine speed, speed of the input shaft and output shaft of the gearbox and clutch position, and where the control unit is arranged so as where, when the upshifting takes place, the disk clutch is disengaged and the intermediate shaft is disengaged from the main shaft. The power plant is characterized in that the control unit also has a control function for said braking means and in that the control unit is arranged so as, when the upshifting takes place, to activate the braking means so that the rotational speed of the intermediate shaft is adapted to the next gear selected and at the same time to activate the engine-braking device in order to adapt the rotational speed of the engine to the rotational speed of the input shaft.

The advantage of the procedure and the device according to the invention is that the upshifts are carried out more rapidly and with retained comfort compared with the known art. A shorter shifting time is obtained for upshifts between different gears and at different rotational speeds. The time-saving varies depending on conditions.

In an embodiment of the procedure and the device according to the invention, re-engagement of the disk clutch takes place when the engine has a rotational speed which is slightly higher than the speed of the input shaft of the gearbox.

Compared with said known engine-braking devices, a positive drive-line torque is obtained more rapidly, that is to say the engine begins to drive the vehicle sooner by virtue of the fact that the drive line already receives a driving torque at (if we continue with the example indicated above) the engine speed 1300 rpm instead of at 1200 rpm. The speed of the engine does not have to be reduced as much, which results in a shorter time for the discontinuation of driving power from the engine. Moreover, the reaction time in the gear-engagement servo is eliminated. Furthermore, it is not necessary to have a safety margin when driving uphill. The invention means that use is made of a little of the surplus motive energy of the engine to provide drive line torque instead of braking away the energy in the engine-braking device.

Compared with using only a gearbox brake, longer gear stages are possible by virtue of the invention without the shifting time becoming appreciably longer, because the engine speed is relatively synchronous compared with the speed of the input shaft at the start of the work of re-engagement of the disk clutch. This is owing to the use of the engine-braking device. By controlling the engine-braking device, it is also possible to select an optimum engine speed level at the start of re-engagement of the disk clutch. The selection of optimum engine speed level depends on the selection of shifting rapidity, shifting comfort and clutch wear.

Assume also that the vehicle does not lose speed during upshifting and that the product of the new gear selected and the speed of the output shaft is, to follow the earlier speed example, a constant 1200 rpm during upshifting. The same argument can be used if the vehicle loses speed or increases speed during shifting, but it is then necessary to take the speed change into account in the control of the engine-braking device and the gearbox brake. It takes time to reduce the speed of an engine down as far as 1200 rpm. By means of the invention, it is possible that it is only necessary to reduce the engine speed to, for example, 1300 rpm before it is possible to have drive in the drive line again (positive drive-line torque). This contributes to the shorter driving power interruption time, that is to say the time for upshifting. The reason the engine speed does not have to be reduced as far as 1200 rpm is that the disk clutch between the engine and the gearbox is not as sensitive to speed differences as in particular a gear with an unsynchronized claw coupling (unsynchronized gear). When shifting takes place, such a synchronizing device, compared with a disk clutch, synchronizes the speeds of the shafts immediately, that is to say the speed adaptation takes place in a very short time. On the other hand, a disk clutch allows more slip. Therefore, if an unsynchronized gear is engaged already at an engine speed (according to the earlier example) of 1300 rpm, the result is a jerk and an uncomfortable shift. On the other hand, if the disk clutch is applied at the same engine speed of 1300 rpm, a more balanced slip and a softer torque progress in the drive line are obtained, which results in a comfortable shift.

Further advantageous embodiments of the invention emerge from the subsequent dependent patent claims.

### BRIEF DESCRIPTION OF THE DRAWINGS

The present invention will be described in detail below with reference to accompanying drawings, which show by way of example further preferred embodiments of the invention and also the technical background.
Figure 1 shows the fundamental phases during an upshift by means of a comparison between engine torque and rotational speed of the engine in relation to time.
Figure 2 shows a power plant in principle.
Figure 3 shows the disk clutch and the gearbox in Figure 2 on enlarged scale.

### DESCRIPTION OF PREFERRED EMBODIMENTS OF THE INVENTION

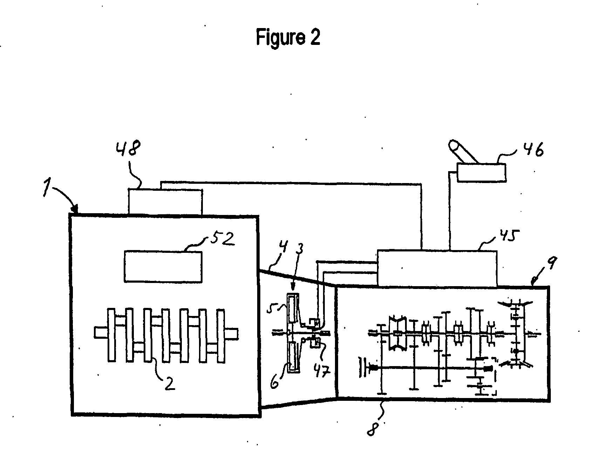

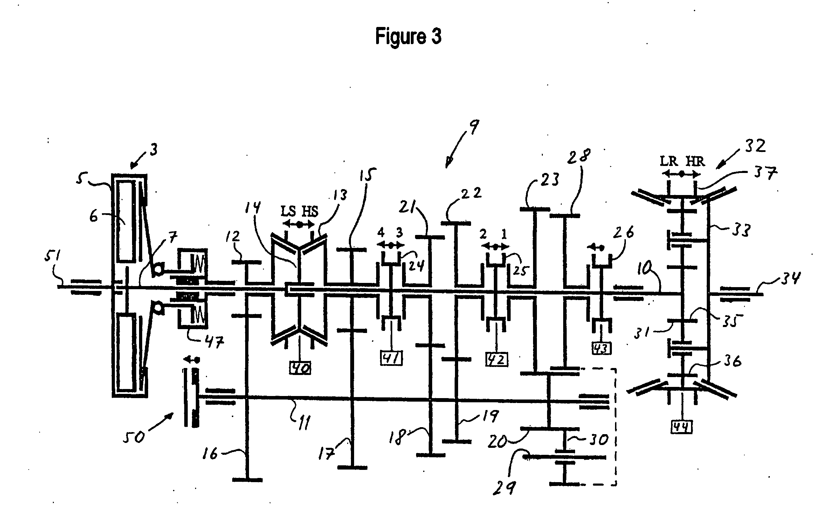

In Figure 2, reference number 1 designates a six-cylinder internal combustion engine, for example a diesel engine, the crankshaft 2 of which is coupled to a single-plate dry disk clutch, designated generally by reference number 3, which is enclosed in a clutch case 4. A two-plate version can be used instead of a single-plate disk clutch. The crankshaft 2 is, via the output shaft 51 of the engine (see Figure 3), connected non-rotatably to the clutch housing 5 of the clutch 3, while its plate 6 is connected non-rotatably to an input shaft 7 which is mounted rotatably in the casing 8 of a gearbox designated generally by reference number 9. A main shaft 10 and an intermediate shaft 11 are also mounted rotatably in the casing 8. Also illustrated are an engine control unit 48, a transmission control unit 45 and a manual gear selector 46 coupled to the transmission control unit 45. The transmission control unit 45 and the engine control unit 48 are adapted for communication with one another.

As can be seen most clearly from Figure 3, a gearwheel 12 is mounted rotatably on the input shaft 7 and is lockable on the shaft by means of a coupling sleeve 13 which is provided with synchronizing means and is mounted non-rotatably but axially displaceably on a hub 14 connected non-rotatably to the input shaft. By means of the coupling sleeve 13, a gearwheel 15 mounted rotatably on the main shaft 10 is also lockable relative to the input shaft 7. The coupling sleeve 13 and the hub 14 are, for each gear, provided with a claw coupling (not shown) for locking the gearwheel 12, 15 concerned in relation to the shaft 7. With the coupling sleeve 13 in a central position, both the gearwheels 12 and 15 are disengaged from their shafts 7 and, respectively, 10. The gearwheels 12 and 15 engage with gearwheels 16 and, respectively, 17 which are connected non-rotatably to the intermediate shaft 11. Arranged in a rotationally fixed manner on the intermediate shaft 11 are further gearwheels 18, 19 and 20 which engage with gearwheels 21, 22 and, respectively, 23 which are mounted rotatably on the main shaft 10 and are lockable on the main shaft by means of coupling sleeves 24 and, respectively, 25 which, in the illustrative embodiment shown, do not have synchronizing devices. A further gearwheel 28 is mounted rotatably on the main shaft 10 and engages with an intermediate gearwheel 30 which is mounted rotatably on a separate shaft 29 and in turn engages with the intermediate shaft gearwheel 20. The gearwheel 28 is lockable on its shaft by means of a coupling sleeve 26. Corresponding claw couplings (not shown) are present for all the gears.

The gearwheel pairs 12, 16 and 15, 17 and the coupling sleeve 13 form a split gearing with a low gear stage LS and a high gear stage HS. The gearwheel pair 15, 17 also forms., together with the gearwheel pairs 21, 18, 22, 19, 23, 20 and 28, 30, a basic gearbox with four forward gears and one reverse gear. Arranged in a rotationally fixed manner on the output end of the main shaft is a gearwheel 31 which forms the sun gear 1 in a two-stage range gear of planetary type which is designated by reference number 32 and the planet-wheel carrier 33 of which is connected in a rotationally fixed manner to a shaft 34 which forms the output shaft of the gearbox. The planet wheels 35 of the range gear 32 engage with a ring gear 36 which, by means of a coupling sleeve 37, is lockable relative to the gearbox casing 8 for low range LR and relative to the planet-wheel carrier 33 for high range HR.

The coupling sleeves 13, 24, 25, 26 and 37 are displaceable as shown by the arrows in Figure 2, the gear stages shown in conjunction with the arrows being obtained.

The displacement is brought about by servo devices 40, 41, 42, 43 and 44 indicated diagrammatically in Figure 2, which can be pneumatically operated piston/cylinder arrangements of the type used in a gearbox of the type described above, which is marketed under the name Geartronic^{®}.

The servo devices 40, 41, 42, 43 and 44 are controlled by a transmission control unit 45 (see Figure 2), comprising a microcomputer, depending on signals fed into the control unit representing various engine and vehicle data comprising at least engine speed, vehicle speed, throttle pedal position and, where appropriate, engine-braking device on/off, when an electronic gear selector 46 coupled to the control unit 45 is in its automatic transmission position. When the selector is in the position for manual shifting, shifting takes place at the command of the driver via the gear selector 46.

The control unit 45 also controls the fuel injection, that is to say the engine speed, depending on the throttle pedal position and also the air supply to a pneumatic piston/cylinder arrangement 47, by means of which the disk clutch 3 is disengaged or engaged.

The position of the automated clutch 3 is regulated during shifting by the control unit 45 by means of information about the position of the throttle lever 48, engine speed, engine torque and the position of the clutch 3 so that soft shifting takes place.

According to the invention, the engine 1 is equipped with some type of engine-braking device. In a preferred embodiment of the invention, the engine-braking device is a compression brake 52. It is also possible within the scope of the inventive idea to use other types of engine-braking device. During upshifting, the compression brake 52 is controlled by the transmission control unit 45 via the engine control unit 48.

According to the invention, the gearbox 9 is equipped with an intermediate shaft brake 50. The intermediate shaft brake 50 usually consists of a disk clutch (shown only diagrammatically), the braking force of which is controlled by virtue of a hydraulic piston (not shown) pressing the disk clutch together with variable force. The pressure of the piston, and thus the braking force of the intermediate shaft brake, is regulated by the transmission control unit 45. Other types of intermediate shaft brake are also possible, such as, for example, various types of disk brake.

Upshifting according to the invention can be initiated by the driver of the vehicle or by the automatic system depending on a gear selection strategy stored in the transmission control unit 45. Assume, for example, that the low gear stage LS and the low range position are engaged and an upshift from first gear to third gear is initiated. The transmission control unit 45 then first controls the engine control unit 48 so as to regulate the fuel supply to the engine 1, so that a torqueless or virtually torqueless state is created in the drive line of the vehicle, that is to say the torque transmission from the crankshaft 2 of the engine 1 to the input shaft 7 of the gearbox 9 will be virtually zero. When the torque on the input shaft 7 is virtually zero, the transmission control unit 45 disengages the disk clutch 3. After the disk clutch 3 has been disengaged, first gear is disengaged, that is to say the coupling sleeve 25 is moved into central position. The gearwheel 23 of the first gear is therefore disengaged from the main shaft 10, and the intermediate shaft 11 is thus also disengaged from the main shaft 10. When the transmission control unit 45 has registered that the disk clutch 3 and the intermediate shaft 11 are disengaged, the transmission control unit 45 gives a signal that the engine-braking device 52 is to begin reducing the engine speed to a speed just above the speed for third gear and a signal that the intermediate shaft brake is to begin to reduce the speed of the intermediate shaft 11 so that the speed of the intermediate shaft 11 is synchronous with the speed of the main shaft 10 for third gear. Speed sensors (not shown) measure the rotational speed of the crankshaft 2 of the engine, the intermediate shaft 11 and the main shaft 10. As soon as the transmission control system 45 registers, by means of the speed sensors, that the correct speed of the intermediate shaft 11 has been reached, the transmission control system 45 gives a signal so that the servo device 41 changes the position of the coupling sleeve 24 and the gearwheel 21 is locked in relation to the main shaft 10 and third gear is engaged. By virtue of the fact that the input shaft 7 is coupled together with the intermediate shaft 11 throughout upshifting by the gearwheels 12 and 16, the input shaft 7 is braked to the same degree as the intermediate shaft. In order to save time, the speed of the engine 1 is not reduced all the way down to the new speed of the input shaft 7 but, according to the invention, to just above the new speed of the input shaft. When the engine 1 has reached the desired speed, the transmission control unit 45 engages the disk clutch 3 with a little slip so that the last speed difference is synchronized. As the speed of the engine 1 is slightly higher than that of the input shaft 7, a small positive, that is to say driving, torque is obtained in the drive line. Use is therefore made of part of the motive energy the engine 1 still has, on account of the speed difference between first and third gear, to drive the vehicle forward. What takes most time during upshifting is engine speed reduction. Speed reduction of the intermediate shaft 11 goes more rapidly because this involves a smaller mass in relation to the possible available braking effect from the intermediate shaft brake 50. The intermediate shaft 11 therefore normally reaches the new desired speed sooner than the engine does.

By virtue of the fact that, according to the invention, the speed reduction of the engine 1 and the intermediate shaft 11 takes place in parallel, and also by virtue of the fact that the engine speed is not reduced down as far as the speed of the input shaft, a shorter engine-braking time is obtained than according to the known art where only an engine-braking device is used during upshifting. The selection of the speed when the engine is to be engaged depends on the selection of shifting rapidity, shifting comfort and clutch wear.

The upshifting procedure and the device according to the invention are applicable in all upshifts which comprise unsynchronized shifting in the gearbox 9.

The upshifting according to the invention could take place without fuel supply, for example when driving downhill. The invention is of most use, however, on an uphill gradient when the time for upshifting according to the known art is not short enough. It is possible to introduce a selective function into the control units so that the function according to the invention is, for example, engaged only during upshifting when the driving resistance of the vehicle exceeds a certain value.

The functions according to the invention can be carried out by one, two or more control units.

The gear position sensor can be a sensor arranged directly in the gearbox or it can be indirect, that is to say the gear engaged is determined by means of the relationship between the rotational speed on the respective output shafts of the engine 1 and the gearbox 9.

## Claims

1. A procedure for upshifting gear in a motor vehicle, comprising an internal combustion engine (1) with an engine-braking device (52), an automated disk-clutch (3), a multi-stage gearbox (9), in the casing (8) of which an input shaft (7), an intermediate shaft (11) and a main shaft (10) are mounted, and braking means (50) for braking the intermediate shaft (11), and where, when the upshifting takes place, the disk clutch (3) is disengaged and the intermediate shaft (11) is disengaged from the main shaft (10), **characterized in that** the braking means (50) is activated so that the rotational speed of the intermediate shaft (11) is adapted to the next gear selected at the same time as the rotational speed of the engine (1) is adapted to the rotational speed of the input shaft (7) in the new gear by virtue of the engine-braking device (52) being activated.

2. The procedure for upshifting gear in a motor vehicle as claimed in claim 1, **characterized in that** the method also comprises the steps of the intermediate shaft (11) being coupled to the main shaft (10) again with the new gear and the disk clutch (3) being reengaged.

3. The procedure for upshifting gear in a motor vehicle as claimed in claim 2, **characterized in that** the re-engagement of the disk clutch (3) takes place when the engine (1) has a rotational speed which is slightly higher than the speed of the input shaft (7).

4. A power plant for a motor vehicle, comprising an internal combustion engine (1) with an engine-braking device (52), an automated disk-clutch (3), a multi-stage gearbox (9) which has at least one intermediate shaft (11) which is mounted in a casing (8) and has at least one gearwheel (16, 17) in engagement with a gearwheel (12, 15) on an input shaft (7) mounted in the casing (8) and braking means (50) with which the rotation of the intermediate shaft (11) can be braked rapidly when disengagement of the disk clutch (3) takes place, a main shaft (10), mounted in the casing, with gearwheels (21, 22, 23) which engage with gearwheels (18, 19, 20) on the intermediate shaft (11), at least one gearwheel in each pair of intermeshing gearwheels on the intermediate shaft (11) and the main shaft (10) being mounted rotatably on its shaft and lockable by coupling means (24, 25), of which at least the coupling means for some forward gears lack a synchronizing function, and where the disk clutch (3) is arranged to transmit driving power from the output shaft (51) of the engine (1) to the input shaft (7) of the gearbox, a control unit (48, 45) with at least an engine control function, a control function for the engine-braking device (52) and a disk-clutch control function, into which control unit (48, 45) signals are fed representing gear selected and various engine and vehicle data comprising at least engine speed, speed of the input shaft and output shaft (7) of the gearbox and disk clutch position, and where the control unit (45) is arranged so as, when upshifting takes place, to disengage the disk clutch (3) and to disengage the intermediate shaft (11) from the main shaft (10), **characterized in that** the control unit (45) also has a control function for said braking means (50) and **in that** the control unit (45) is arranged so as, when the upshifting takes place, to activate the braking means (50) so that the rotational speed of the intermediate shaft (11) is adapted to the next gear selected and at the same time to activate the engine-braking device (52) in order to adapt the rotational speed of the engine (1) to the rotational speed of the input shaft (7).

5. The power plant for a motor vehicle as claimed in claim 4, **characterized in that** the control unit (45) is arranged to bring about re-engagement of the disk clutch (3) at an engine speed which is slightly higher than the speed of the input shaft (7) in the new gear selected.

6. The power plant for a motor vehicle as claimed in one of claims 4 and 5, **characterized in that** the engine-braking device is a compression brake (52).

## Patentansprüche

1. Verfahren zum Hochschalten eines Ganges in einem Kraftfahrzeug, das einen Verbrennungsmotor (1) mit einer Motorbremsvorrichtung (52), eine automatische Scheibenkupplung (3), ein Mehrstufengetriebe (9), in dessen Gehäuse (8) eine Eingangswelle (7), eine Zwischenwelle (11) und eine Hauptwelle (10) angebracht sind, und eine Bremseinrichtung (50) zum Bremsen der Zwischenwelle (11) umfasst, wobei, wenn das Hochschalten stattfindet, die Scheibenkupplung (3) ausgerückt und die Zwischenwelle (11) außer Eingriff mit der Hauptwelle (10) gebracht wird, **dadurch gekennzeichnet, dass** die Bremseinrichtung (50) so aktiviert wird, dass die Drehzahl der Zwischenwelle (11) zur gleichen Zeit an den nächsten gewählten Gang angepasst wird, zu der die Drehzahl des Motors (1) an die Drehzahl der Eingangswelle (7) in dem neuen Gang durch Aktivierung der Motorbremsvorrichtung (52) angepasst wird.

2. Verfahren zum Hochschalten eines Ganges in einem Kraftfahrzeug nach Anspruch 1, **dadurch gekennzeichnet, dass** das Verfahren auch die Schritte umfasst, dass die Zwischenwelle (11) wieder mit der Hauptwelle (10) gekoppelt wird, wobei der neue Gang und die Scheibenkupplung (3) wieder eingerückt werden.

3. Verfahren zum Hochschalten eines Ganges in einem Kraftfahrzeug nach Anspruch 2, **dadurch gekennzeichnet dass** das Wiedereinrücken der Scheibenkupplung (3) stattfindet, wenn der Motor (1) eine Drehzahl aufweist, die etwas höher ist als die Drehzahl der Eingangswelle (7).

4. Antriebsaggregat für ein Kraftfahrzeug, mit
- einem Verbrennungsmotor (1) mit einer Motorbremsvorrichtung (52),
- einer automatischen Scheibenkupplung (3),
- einem Mehrstufengetriebe (9), das wenigstens eine Zwischenwelle (11) aufweist, die in einem Gehäuse (8) angebracht ist und wenigstens ein Zahnrad (16, 17), das in Eingriff mit einem Zahnrad (12, 15) an einer Eingangswelle (7) steht, die in dem Gehäuse (8) angebracht ist, und eine Bremseinrichtung (50) aufweist, mit der die Drehung der Zwischenwelle (11) schnell gebremst werden kann, wenn ein Ausrücken der Scheibenkupplung (3) stattfindet,
- einer in dem Gehäuse angebrachten Hauptwelle (10) mit Zahnrädern (21, 22, 23), die mit Zahnrädern (18, 19, 20) an der Zwischenwelle (11) in Eingriff stehen, wobei wenigstens ein Zahnrad in jedem Paar von miteinander kämmenden Zahnrädern an der Zwischenwelle (11) und der Hauptwelle (10) auf seiner Welle drehbar und durch Kupplungseinrichtungen (24, 25) sperrbar angebracht ist, wobei wenigstens die Kupplungseinrichtungen für einige Vorwärtsgänge keine Synchronisierfunktion aufweisen, und wobei die Scheibenkupplung (3) so angeordnet ist, dass sie eine Antriebskraft von der Ausgangswelle (51) des Motors (1) auf die Eingangswelle (7) des Getriebes überträgt,
- einer Steuereinheit (48, 45) mit wenigstens einer Motorsteuerfunktion, einer Steuerfunktion für die Motorbremsvorrichtung (52) und einer Scheibenkupplungssteuerfunktion, wobei der Steuereinheit (48, 45) Signale zugeführt werden, die einen gewählten Gang und verschiedene Motor- und Fahrzeugdaten darstellen, die wenigstens die Motordrehzahl, die Drehzahl der Eingangswelle und der Ausgangswelle (7) des Getriebes und die Scheibenkupplungsposition umfassen, wobei die Steuereinheit (45) so angeordnet ist, dass, wenn ein Hochschalten stattfindet, die Scheibenkupplung (3) ausgerückt und die Zwischenwelle (11) außer Eingriff mit der Hauptwelle (10) gebracht wird, **dadurch gekennzeichnet, dass** die Steuereinheit (45) außerdem eine Steuerfunktion für die Bremseinrichtung (45) aufweist, und dass die Steuereinheit (45) so ausgebildet ist, dass, wenn das Hochschalten stattfindet, die Bremseinrichtung (50) so aktiviert wird, dass die Drehzahl der Zwischenwelle (11) an den nächsten gewählten Gang angepasst wird und gleichzeitig die Motorbremsvorrichtung (52) aktiviert wird, um die Drehzahl des Motors (1) an die Drehzahl der Eingangswelle (7) anzupassen.

5. Antriebsaggregat für ein Kraftfahrzeug nach Anspruch 4, **dadurch gekennzeichnet, dass** die Steuereinheit (45) so angeordnet ist, dass sie ein Wiedereinrücken der Scheibenkupplung (3) bei einer Motordrehzahl durchführt, die etwas höher ist als die Drehzahl der Eingangswelle (7) in dem neuen gewählten Gang.

6. Antriebsaggregat für ein Kraftfahrzeug nach einem der Ansprüche 4 und 5, **dadurch gekennzeichnet, dass** die Motorbremsvorrichtung eine Kompressionsbremse (52) ist.

## Revendications

1. Procédé pour passer à une vitesse supérieure dans un véhicule à moteur, comportant un moteur à combustion interne (1) ayant un dispositif de freinage de moteur (52), un embrayage à disque automatisé (3), une boîte de vitesses à plusieurs étages (9), dans le carter (8) de laquelle un arbre d'entrée (7), un arbre intermédiaire (11) et un arbre principal (10) sont montés, et des moyens de freinage (50) pour freiner l'arbre intermédiaire (11), et où, lorsque le passage à une vitesse supérieure a lieu, l'embrayage à disque (3) est libéré, et l'arbre intermédiaire (11) est libéré de l'arbre principal (10), **caractérisé en ce que** les moyens de freinage (50) sont activés de sorte que la vitesse de rotation de l'arbre intermédiaire (11) est adaptée à la vitesse suivante sélectionnée lorsque la vitesse de rotation du moteur (1) est adaptée à la vitesse de rotation de l'arbre d'entrée (7) dans la nouvelle vitesse en vertu du dispositif de freinage de moteur (52) qui est activé.

2. Procédé pour passer à une vitesse supérieure dans un véhicule à moteur selon la revendication 1, **caractérisé en ce que** le procédé comporte également les étapes de l'arbre intermédiaire (11) qui est couplé à l'arbre principal (10), la nouvelle vitesse et l'embrayage à disque (3) étant de nouveau mis en prise.

3. Procédé pour passer à une vitesse supérieure dans un véhicule à moteur selon la revendication 2, **caractérisé en ce que** la remise en prise de l'embrayage à disque (3) a lieu lorsque le moteur (1) a une vitesse de rotation qui est légèrement supérieure à la vitesse de l'arbre d'entrée (7).

4. Installation de puissance pour un véhicule à moteur, comportant un moteur à combustion interne (1) ayant un dispositif de freinage de moteur (52), un embrayage à disque automatisé (3), une boîte de vitesses à plusieurs étages (9) qui a au moins un arbre intermédiaire (11) qui est monté dans un carter (8), et a au moins une roue dentée (16, 17) en prise avec une roue dentée (12, 15) sur un arbre d'entrée (7) monté dans le carter (8), et des moyens de freinage (50) avec lesquels la rotation de l'arbre intermédiaire (11) peut être rapidement freinée lorsque une libération de l'embrayage à disque (3) a lieu, un arbre principal (10) monté dans le carter, ayant des roues dentées (21, 22, 23) qui viennent en prise avec les roues dentées (18, 19, 20) sur l'arbre intermédiaire (11), au moins une roue dentée dans chaque paire de roues dentées engrenant mutuellement sur l'arbre intermédiaire (11) et l'arbre principal (10) étant montée de manière rotative sur son arbre, et pouvant être verrouillée par des moyens de couplage (24, 25), dont au moins les moyens de couplage pour certaines vitesses vers l'avant manquent d'une fonction de synchronisation, et où l'embrayage à disque (3) est agencé pour transmettre une puissance d'entraînement à partir de l'arbre de sortie (51) du moteur (1) vers l'arbre d'entrée (7) de la boîte de vitesses, une unité de commande (48, 45) ayant au moins une fonction de commande de moteur, une fonction de commande pour le dispositif de freinage de moteur (52) et une fonction de commande d'embrayage à disque, unité de commande (48, 45) dans laquelle des signaux sont alimentés représentant une vitesse sélectionnée et diverses données de véhicule et de moteur comportant au moins une vitesse de moteur, une vitesse de l'arbre d'entrée et de l'arbre de sortie (7) de la boîte de vitesses et une position d'embrayage à disque, et où l'unité de commande (45) est agencée, lorsqu'un passage à une vitesse supérieure a lieu, de manière à libérer l'embrayage à disque (3) et à libérer l'arbre intermédiaire (11) de l'arbre principal (10), **caractérisée en ce que** l'unité de commande (45) a également une fonction de commande pour lesdits moyens de freinage (50), et **en ce que** l'unité de commande (45) est agencée, lorsque le passage à une vitesse supérieure a lieu, de manière à activer les moyens de freinage (50) de sorte que la vitesse de rotation de l'arbre intermédiaire (11) soit adaptée à la vitesse suivante sélectionnée, et en même temps à activer le dispositif de freinage de moteur (52) afin d'adapter la vitesse de rotation du moteur (1) à la vitesse de rotation de l'arbre d'entrée (7).

5. Installation de puissance pour un véhicule à moteur selon la revendication 4, **caractérisée en ce que** l'unité de commande (45) est agencée pour entraîner une remise en prise de l'embrayage à disque (3) à une vitesse de moteur qui est légèrement supérieure à la vitesse de l'arbre d'entrée (7) dans la nouvelle vitesse sélectionnée.

6. Installation de puissance pour un véhicule à moteur selon l'une quelconque des revendications 4 et 5, **caractérisée en ce que** le dispositif de freinage de moteur est un frein sur échappement (52).
